# FASCICULE DE BREVET EUROPEEN

(11) **EP 1 025 347 B1**
(45) Date de publication et mention de la délivrance du brevet: **10.09.2003**
(21) Numéro de dépôt: 98950151.5
(22) Date de dépôt: 16.10.1998
(51) Int. Cl.: F02B 23/10

(54) **MOTEUR A INJECTION DIRECTE ET ALLUMAGE COMMANDE**
DIREKTEINSPRITZBRENNKRAFTMASCHINE MIT FREMDZÜNDUNG
DIRECT INJECTION ENGINE AND CONTROLLED IGNITION

(30) Priorité: 24.10.1997 FR 9713337
(43) Date de publication de la demande: 09.08.2000
(73) Titulaire: Renault s.a.s., 92100 Boulogne Billancourt (FR)
(72) Inventeur: CHAPUIS, Arnaud, F-92500 Rueil Malmaison (FR); CUVILLIER, Paul, F-27200 Vernon (FR); DAGAND, Françoise, F-92500 Rueil Malmaison (FR); FLOCH, Alain, F-91460 Marcoussis (FR)
(86) Numéro de dépôt international: FR9802224
(87) Numéro de publication internationale: WO99022125

(56) Documents cités:
- EP-A- 0 277 296
- EP-A- 0 412 008
- EP-A- 0 778 403
- GB-A- 2 268 973
- GB-A- 2 310 003
- FRAIDL : "Direkteinspritzung bei Ottomotoren: aktuelle Trends und zukünftige Strategien" MOTORTECHNISCHE ZEITSCHRIFT, vol. 28, no. 2, 1 février 1997, pages 82-85, XP000678381 stuttgart

## Description

La présente invention concerne un moteur à combustion interne à allumage commandé et injection directe de carburant comportant quatre soupapes par cylindre. L'invention concerne plus particulièrement la forme de la chambre de combustion d'un tel moteur.

Il est connu par le document FR-A-2.650.630 de réaliser un moteur multicylindre à injection directe du type comportant quatre soupapes par cylindre. Selon cet art antérieur, le moteur qui comprend des moyens d'admission et d'échappement, des moyens d'injection du carburant, des moyens d'allumage pour provoquer la combustion du mélange air/carburant, à l'intérieur du moteur, est caractérisé en ce qu'il comprend pour chaque cylindre :
- une cavité "en toit" ménagée dans la culasse, constituée de deux parois planes inclinées se rejoignant au sommet par une arête sensiblement cylindrique ;
- deux soupapes d'admission et deux soupapes d'échappement débouchant dans les parois inclinées, les soupapes d'admission et d'échappement étant disposées, respectivement, diamétralement opposées l'une de l'autre ;
- deux bougies débouchant dans la paroi cylindrique au sommet de la chambre de combustion et orientées de façon inclinée par rapport à l'axe vertical du cylindre;
- un injecteur de carburant débouchant au sommet de la cavité "en toit" sensiblement au centre de l'arête.

Chacune des chambres de combustion du moteur selon cet art antérieur est donc formée par une cavité s'étendant dans la culasse, cavité dans laquelle débouchent de façon diamétralement opposée, les soupapes d'échappement et les soupapes d'admission, et où débouchent en partie supérieure un injecteur et deux bougies. Cette disposition, bien que favorable à un fonctionnement en charge stratifiée grâce à un mouvement aérodynamique important de type "Swirl" (rotation autour de l'axe du cylindre), a pour inconvénient d'augmenter sensiblement la hauteur de la culasse et donc l'encombrement du moteur.

La présente invention a donc pour objet de réaliser un moteur à combustion interne à allumage commandé et injection directe de carburant de conception nouvelle qui remédie aux inconvénients précités.

Selon l'invention, le moteur à combustion interne est caractérisé en ce qu'il comprend les caractéristiques de la revendication 1.

Selon une autre caractéristique du moteur à combustion interne objet de l'invention, les électrodes de la bougie d'allumage sont positionnées en périphérie du cône d'injection du carburant.

On comprendra mieux les buts, aspects et avantages de la présente invention, d'après la description donnée ci-après de deux modes de réalisation de l'invention, présentés à titre d'exemples non limitatifs, en se référant aux dessins annexés, dans lesquels :
la figure 1 est une vue en perspective schématique, illustrant un premier mode de réalisation d'une chambre de combustion pour moteur à combustion interne selon l'invention ;
la figure 2 est une vue en coupe transversale de la chambre de combustion représentée à la figure 1 ;
la figure 3 est une vue similaire à la figure 1, illustrant un second mode de réalisation d'une chambre de combustion pour moteur à combustion interne selon l'invention.

Conformément aux figures, seules les parties caractéristiques des moteurs nécessaires à la compréhension de l'invention ont été figurées, ainsi sur les figures n'est représenté qu'une seule chambre de combustion, les autres chambres de combustion étant identiques à celle illustrée.

Pour simplifier la lecture des dessins, les mêmes éléments portent les mêmes références d'une figure à l'autre. Par ailleurs, les éléments du second mode de réalisation ont pour numéros de référence le numéro 2 suivi du numéro (sur deux chiffres) de l'élément correspondant du premier mode de réalisation de façon à ne former qu'un seul nombre, par exemple l'un des conduits d'admission du second mode de réalisation est référencé 205 alors que le conduit d'admission correspondant du premier mode de réalisation est référencé 5.

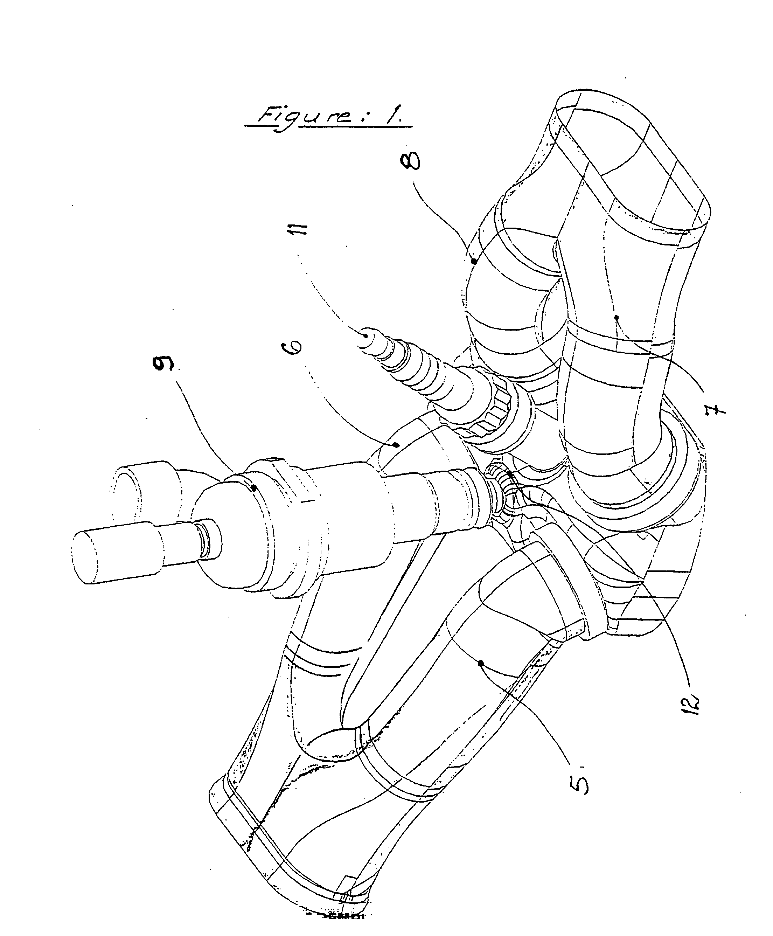

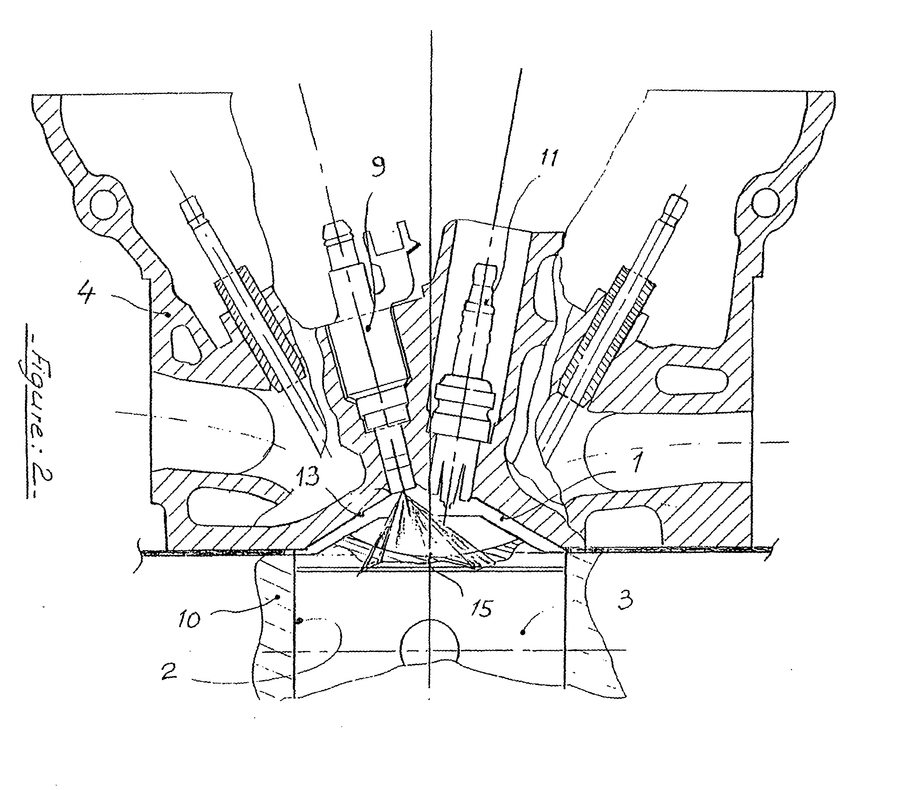

Le premier mode de réalisation de l'invention décrit conformément aux figures 1 et 2, concerne un moteur à combustion interne du type multicylindre à allumage commandé et à injection directe de carburant.

Le moteur à combustion interne selon l'invention est principalement formé par une culasse 4 surmontant un bloc carter-cylindres 10. Une pluralité d'alésages cylindriques ou cylindres, identiques au cylindre 2 représenté, sont agencés dans le carter-cylindres 10. Chaque cylindre 2 loge un piston 3 dont le mouvement de va-et-vient est destiné à être converti en un mouvement rotatif par un système bielle-vilebrequin non représenté.

Dans la partie supérieure du cylindre 2 s'étend une chambre de combustion 1 qui est délimitée par la face supérieure du piston 3, la face inférieure de la culasse 4 et les parois intérieures du cylindre 2. La face inférieure de la culasse 4 s'étendant au-dessus du piston 3 présente une cavité 13 en forme de toit à deux pentes constituée par deux parois planes inclinées se rejoignant au sommet par une arête arrondie s'étendant dans le plan médian axial défini par les axes du vilebrequin et du cylindre 2. L'angle formé par les deux pentes du toit 13 est par exemple compris entre 15° et 60°.

La culasse 4 est traversée transversalement pour chaque chambre de combustion 1 par deux conduits d'admission 5, 6 en air frais comburant et par deux conduits d'échappement 7 et 8 des gaz brûlés, s'étendant respectivement de part et d'autre du plan vertical de symétries des cylindres, entre une face latérale de la culasse 4 et la chambre de combustion 1.

Ces conduits 5, 6, 7 et 8 qui sont de type jumelés, comme figurés, ou bien encore de type séparés, s'étendent parallèlement au plan médian transversal défini par l'axe du cylindre 2 débouchent respectivement dans la chambre de combustion 1 par des orifices d'admission et d'échappement non figurés qui sont munis classiquement de soupapes à tige permettant d'en contrôler l'ouverture.

Les deux orifices d'admission débouchent donc dans la chambre de combustion 1, d'un même côté par rapport à l'arête 12, tandis que les deux orifices d'échappement 11 débouchent dans la chambre de combustion 1 du côté opposé aux orifices d'admission. L'angle formé entre les soupapes d'admission et d'échappement correspond à l'angle du toit 13 et est donc compris entre 15° et 60°. Par ailleurs, le calibrage des orifices d'admission est adapté pour occuper au maximum le plan incliné correspondante du toit 13, en limite d'effet de paroi.

Les deux conduits d'admission 5 et 6 sont conformés pour générer dans la chambre de combustion 1 un mouvement ordonné de l'air, tel qu'un tourbillon de type Tumble, c'est-à-dire d'axe perpendiculaire à l'axe du cylindre 2, orienté de l'admission vers l'échappement ou bien encore de type Swirl, c'est-à-dire d'axe parallèle à l'axe du cylindre 2. Cette conformation est obtenue soit directement par la forme des conduits 5 et 6, qui sont alors rectilignes et inclinés par rapport à l'axe du cylindre 2 ou bien hélicoïdaux, soit encore par des moyens pilotés non figurés qui s'étendent dans les conduits d'admission 5 et 6 et qui génèrent un Tumble ou un Swirl d'intensité variable.

Un injecteur de carburant 9 et une bougie 11 sont implantés dans la culasse débouche 4 de façon à déboucher directement dans la chambre de combustion 1 en position centrale, sensiblement au sommet de la cavité 13. L'injecteur 9 comme la bougie 11 s'étendent parallèlement à l'axe du cylindre 2 ou bien légèrement inclinés par rapport à ce dernier. La bougie est positionnée à proximité immédiate de l'injecteur de façon que les électrodes de celle-ci s'étendent en périphérie du jet de carburant.

Lorsque la bougie est inclinée par rapport au plan médian axial, elle l'est de préférence en direction des conduits d'échappement tandis que l'injecteur lorsqu'il est incliné, l'est en direction des conduits d'admission. L'angle du cône d'injection du carburant de l'injecteur 9 est choisi de préférence entre 30 et 60° environ, tandis que la pression d'injection du carburant comprise entre 10 et 100 bars est de préférence choisie entre 10 et 50 bars.

La face supérieure du piston 3 présente une forme générale en toit complémentaire à la surface en toit 13 de la culasse 4 de façon à générer un effet de chasse adapté. L'intensité et la direction de cette chasse, qui sont notamment déterminées par l'épaisseur de la lame d'air entre le piston et la culasse au Point Mort Haut, sont ajustées pour prolonger, en fin de compression, le mouvement aérodynamique engendré lors de l'admission de l'air frais dans la chambre de combustion 1. La hauteur de la chasse est de préférence comprise entre 0.7 et 1.2 mm pour un rapport volumétrique compris entre 10 et 12.

La face supérieure du piston 3 présente par ailleurs, au droit de l'impact du jet de carburant provenant de l'injecteur 9, une cavité 15. Cette cavité 15 améliore la compacité de la chambre de combustion 1 et limite les échanges thermiques avec les parois, elle permet par ailleurs de confiner la zone de carburant au centre de la chambre de combustion en mode stratifiée. La forme des parois de cette cavité ainsi que de celle de son ouverture sont adaptées aux positionnements particuliers retenus pour l'injecteur et la bougie.

Les dimensions de la cavité créent une géométrie lenticulaire, c'est-à-dire en forme de disque de faible profondeur (quelques millimètres) plutôt adaptée pour une aérodynamique de type Tumble.

Selon le premier mode de réalisation des figures 1 et 2, l'injecteur 9 et la bougie 11 sont positionnés dans le plan médian transversal de part et d'autre de l'arête 12, inclinés respectivement en direction des conduits d'admission et des conduits d'échappement.

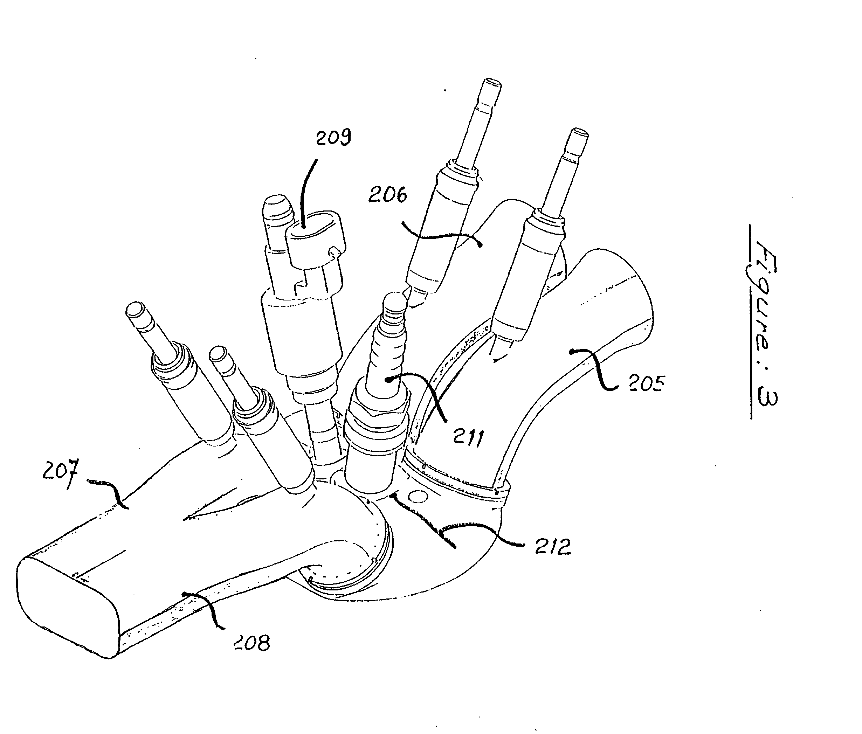

Selon le second mode de réalisation de la figure 3, l'injecteur 209 et la bougie 211 sont positionnés dans le plan médian axial séparant les conduits d'admission 205 et 206 d'une part des conduits d'échappement 207 et 208 d'autre part. L'injecteur 209 et la bougie 211 débouchent donc au droit de l'arête 212 au voisinage de l'axe du cylindre. Si selon le mode de réalisation représenté à la figure 3, l'injecteur 209 et la bougie 211 sont implantés sensiblement de part et d'autre de l'axe du cylindre, il est possible, en variante de réalisation, de positionner l'injecteur 209 ou la bougie 211 exactement dans l'axe du cylindre. L'injecteur 209 et la bougie 211 s'étendent parallèlement à l'axe du cylindre ou bien encore sont légèrement inclinés par rapport à ce dernier tout en demeurant dans le plan médian axial.

Conformément à la description donnée ci-dessus de deux modes de réalisation du moteur objet de l'invention, le fonctionnement d'un tel moteur est le suivant.

L'air frais introduit dans la chambre 1 lors de l'ouverture des soupapes d'admission commandant l'ouverture des orifices d'admission forme un tourbillon de type Tumble ou Swirl. Ce mouvement se poursuit dans la chambre 1 au fur et à mesure de la remontée du piston dans la cavité 15 et est alimenté notamment par les effets de chasse enfin de compression.

A un instant prédéterminé du cycle moteur (repérer par une position angulaire donnée du vilebrequin θ° avant le Point Mort Haut) et pendant une durée adaptée, est opérée l'injection du carburant. Le jet de carburant provenant de l'injecteur 9 vient alors se mélanger à l'air. Le carburant est ainsi entraîné vers la bougie 11 après avoir balayé le fond de la cavité 15 du piston dont la température favorise la vaporisation. L'allumage se produit au voisinage du Point Mort Haut avec une avance prédéterminée et déclenche la combustion qui initiée aux électrodes de la bougie 11 se propage dans toute la chambre de combustion 1 au fur et à mesure de la descente du piston 3.

Suivant le point de fonctionnement du moteur, le phasage de l'injection, la quantité de carburant ainsi que l'avance à l'allumage sont adaptés pour obtenir tantôt un fonctionnement de type stratifié (notamment à faible charge), tantôt un fonctionnement de type homogène (notamment à pleine charge).

Bien évidemment, tous les paramètres du moteur, et notamment les dimensions de la cavité 15, les positionnements de la bougie et de l'injecteur ainsi que la direction et l'intensité du Tumble ou du Swirl ainsi que celles de la chasse sont adaptés par des essais appropriés en fonction de la cylindrée et des caractéristiques couple/puissance souhaitées.

Selon ce moteur objet de la présente invention, la création d'un mouvement aérodynamique ordonné dans la chambre de combustion 1, est importante pour favoriser notablement la combustion en permettant de contrôler la stabilité de la distribution en carburant. De plus, la mise en rotation du mélange combustible permet d'améliorer la stabilité du moteur notamment pour des points de fonctionnement en mélange pauvre homogène.

Les chambres de combustion qui ont été décrites conviennent donc aussi bien à un fonctionnement en charge homogène, à la stoechiométrie ou en mélange pauvre, qu'à un fonctionnement en charge stratifiée. De même, elles conviennent aussi bien à un fonctionnement avec EGR qu'à un fonctionnement sans EGR. Par ailleurs, elles sont adaptées pour générer et entretenir l'aérodynamique interne pendant les phases d'admission et de compression que se soit une aérodynamique de type Tumble (mouvement ordonné autour d'un axe perpendiculaire à l'axe du cylindre).

Bien entendu, l'invention n'est nullement limitée aux modes de réalisation décrits et illustrés qui n'ont été donnés qu'à titre d'exemples non limitatifs.

## Revendications

1. Moteur à combustion interne **caractérisé en ce qu'**il comprend pour chaque cylindre :
- une chambre de combustion (1) délimitée par la face supérieure d'un piston (3) monté dans ledit cylindre (2) et la face inférieure d'une culasse (4) présentant une cavité en forme de toit (13) constituée de deux parois planes inclinées se rejoignant au sommet par une arête arrondie (12;212) s'étendant parallèlement à l'axe longitudinal du moteur ;
- deux conduits d'admission (5,6;205,206) formés à travers la culasse (4) et débouchant dans la chambre de combustion (1) à travers l'une des parois planes par deux orifices distincts d'admission obturés par des soupapes ;
- deux conduits d'échappement (7,8;207,208) formés à travers la culasse (4) et débouchant dans la chambre de combustion (1) du côté opposé aux orifices d'admission par rapport à l'arête par deux orifices distincts d'échappement obturés par des soupapes ;
- un injecteur de carburant (9;209) et une bougie d'allumage (11,211) débouchant dans la chambre de combustion (1) sensiblement au centre de la cavité en toit (13) ;
- la face supérieure du piston (3) étant de forme générale en toit complémentaire à la cavité en toit (13) ménagée dans la culasse (4) et présentant une cavité centrale (15) à géométrie lenticulaire au droit de l'injecteur.

2. Moteur à combustion interne selon la revendication 1, **caractérisé en ce que** les électrodes de la bougie (11;211) sont positionnées en périphérie du cône d'injection du carburant.

3. Moteur à combustion interne selon l'une quelconques des revendications 1 à 2, **caractérisé en ce que** l'angle d'ouverture du cône d'injection est compris entre 30° et 60°.

4. Moteur à combustion interne selon l'une quelconque des revendications 1 à 3, **caractérisé en ce que** l'injecteur (9;209) est incliné par rapport à l'axe du cylindre (2).

5. Moteur à combustion interne selon la revendication 4, **caractérisé en ce que** l'injecteur (9) est incliné du côté des conduits d'admission (5,6).

6. Moteur à combustion interne selon l'une quelconque des revendications 1 à 5, **caractérisé en ce que** la bougie (11;211) est inclinée par rapport à l'axe du cylindre (2).

7. Moteur à combustion interne selon la revendication 6, **caractérisé en ce que** la bougie (11) est inclinée du côté des conduits d'échappement (7,8).

8. Moteur à combustion interne selon l'une quelconques des revendications 1 à 7, **caractérisé en ce que** la bougie (11) et l'injecteur (9) s'étendent sensiblement dans le plan médian transversal et débouchent respectivement de part et d'autre de l'arête centrale (12) délimitant les deux plans inclinés de la cavité en toit (13).

9. Moteur à combustion interne selon l'une quelconques des revendications 1 à 7, **caractérisé en ce que** la bougie (211) et l'injecteur (209) s'étendent sensiblement dans le plan médian axial et débouchent au droit de l'arête (212) respectivement de part et d'autre de l'axe du cylindre.

10. Moteur à combustion interne selon l'une quelconques des revendications 1 à 7, **caractérisé en ce que** la bougie (211) et l'injecteur (209) s'étendent sensiblement dans le plan médian axial et **en ce que** l'injecteur (209) ou la bougie (211) débouche dans l'axe du cylindre.

## Claims

1. An internal combustion engine **characterised in that** it comprises for each cylinder:
- a combustion chamber (1) defined by the upper face of a piston (3) mounted in said cylinder (2) and the lower face of a cylinder head (4) having a pent-roof shape cavity (13) formed by two inclined flat walls which meet at the apex by a rounded edge (12; 212) extending parallel to the longitudinal axis of the engine;
- two inlet ducts (5, 6; 205, 206) formed through the cylinder head (4) and opening into the combustion chamber (1) through one of the flat walls by way of two separate inlet ports closed by valves;
- two exhaust ducts (7, 8; 207, 208) formed through the cylinder head (4) and opening into the combustion chamber (1) on the opposite side to the inlet ports with respect to the edge by way of two separate exhaust ports closed by valves;
- a fuel injector (9; 209) and a spark plug (11, 211) opening into the combustion chamber (1) substantially at the centre of the pent-roof cavity (13);
- the upper face of the piston (3) being of a general pent-roof shape complementary to the pent-roof cavity (13) in the cylinder head (4) and having a central cavity (15) of lenticular geometry in line with the injector.

2. An internal combustion engine according to claim 1 **characterised in that** the electrodes of the spark plug (11; 211) are positioned at the periphery of the fuel injection cone.

3. An internal combustion engine according to either one of claims 1 and 2 **characterised in that** the angle of spread of the injection cone is between 30° and 60°.

4. An internal combustion engine according to any one of claims 1 to 3 **characterised in that** the injector (9; 209) is inclined with respect to the axis of the cylinder (2).

5. An internal combustion engine according to claim 4 **characterised in that** the injector (9) is inclined at the side of the inlet ducts (5, 6).

6. An internal combustion engine according to any one of claims 1 to 5 **characterised in that** the spark plug (11; 211) is inclined with respect to the axis of the cylinder (2).

7. An internal combustion engine according to claim 6 **characterised in that** the spark plug (11) is inclined at the side of the exhaust ducts (7, 8).

8. An internal combustion engine according to any one of claims 1 to 7 **characterised in that** the spark plug (11) and the injector (9) extend substantially in the central transverse plane and issue on respective sides of the central edge (12) delimiting the two inclined planes of the pent-roof cavity (13).

9. An internal combustion engine according to any one of claims 1 to 7 **characterised in that** the spark plug (11) and the injector (9) extend substantially in the central axial plane and issue in line with the edge (212) on respective sides of the axis of the cylinder.

10. An internal combustion engine according to any one of claims 1 to 7 **characterised in that** the spark plug (211) and the injector (209) extend substantially in the central axial plane and that the injector (209) or the spark plug (211) issues on the axis of the cylinder.

## Patentansprüche

1. Verbrennungsmotor, **dadurch gekennzeichnet, dass** er für jeden Zylinder aufweist:
eine Verbrennungskammer (1), die durch die Oberseite eines im Zylinder (2) angeordneten Kolbens (3) und durch die Unterseite eins Zylinderkopfes (4) begrenzt wird, der eine dachförmige Aussparung (13) aufweist, die aus zwei ebenen geneigten Dachflächen besteht, die am First über eine abgerundete Kante (12; 212) miteinander verbunden sind und sich parallel zur Längsachse des Motors erstrecken;
zwei Einlassleitungen (5,6; 205,206), die den Zylinderkopf (4) durchsetzen und in der Verbrennungskammer (1) über zwei getrennt in einer der ebenen Dachflächen ausgebildete, durch Ventile verschließbare Öffnungen münden;
zwei Auslassleitungen (7, 8; 207, 208), die den Zylinderkopf (4) durchsetzen und in der Verbrennungskammer (1) auf der den Einlassöffnungen gegenüberliegenden Seite bezüglich der Kante über zwei getrennte durch Ventile verschließbare Auslassöffnungen münden;
eine Einspritzdüse ((9; 209) für den Kraftstoff und eine Zündkerze (11; 211), die in der Verbrennungskammer (1) im wesentlichen in der Mitte der dachförmigen Aussparung (13) münden;
wobei die Oberseite des Kolbens (3) eine im wesentlichen zur dachförmigen Aussparung (13) im Zylinderkopf (4) komplementäre Dachform aufweist, die mit einer mittigen Aussparung (15) versehen ist, welche eine linsenförmige Geometrie aufweist und der Einspritzdüse gegenüber liegt.

2. Verbrennungsmotor nach Anspruch 1, **dadurch gekennzeichnet, dass** die Elektroden der Zündkerze (11; 211) am Umfang des Einspritzkonus des Kraftstoffs angeordnet sind.

3. Verbrennungsmotor nach einem der Ansprüche 1 bis 2, **dadurch gekennzeichnet, dass** der Öffnungswinkel des Einspritzkonus zwischen 30^und 60° liegt.

4. Verbrennungsmotor nach einem der Ansprüche 1 bis 3, **dadurch gekennzeichnet, dass** die Einspritzdüse (9; 209) geneigt ist bezüglich der Achse des Zylinders (2).

5. Verbrennungsmotor nach Anspruch 4, **dadurch gekennzeichnet, dass** die Einspritzdüse (9) zu den Einlassleitungen (5, 6) hin geneigt ist.

6. Verbrennungsmotor nach einem der Ansprüche 1 bis 5, **dadurch gekennzeichnet, dass** die Zündkerze (11, 211) geneigt ist bezüglich der Achse des Zylinders (2).

7. Verbrennungsmotor nach Anspruch 6, **dadurch gekennzeichnet, dass** die Zündkerze (11) zu den Auslassleitungen (7, 8) hin geneigt ist.

8. Verbrennungsmotor nach einem der Ansprüche 1 bis 7, **dadurch gekennzeichnet, dass** die Zündkerze (11) und die Einspritzdüse (9) im wesentlichen in der Mittenebene in Querrichtung angeordnet sind und beidseits der mittigen Kante (12) münden, die die beiden geneigten Ebenen der dachförmigen Aussparung (13) begrenzt.

9. Verbrennungsmotor nach einem der Ansprüche 1 bis 7, **dadurch gekennzeichnet, dass** die Zündkerze (211) und die Einspritzdüse (209) im wesentlichen in der axialen Mittenebene angeordnet sind und gegenüber der Kante (212) beidseits der Achse des Zylinders münden.

10. Verbrennungsmotor nach einem der Ansprüche 1 bis 7, **dadurch gekennzeichnet, dass** die Zündkerze (211) und die Einspritzdüse (209) im wesentlichen in der axialen Mittenebene angeordnet sind und dass die Einspritzdüse (209) oder die Zündkerze (211) in der Achse des Zylinders mündet.
